# FASCICULE DE BREVET EUROPEEN

(11) **EP 0 769 451 B1**
(45) Date de publication et mention de la délivrance du brevet: **01.09.1999**
(21) Numéro de dépôt: 96402216.4
(22) Date de dépôt: 16.10.1996
(51) Int. Cl.: B64F 1/06

(54) **Absorbeur de choc de sortie de catapulte**
Stossdämpfer eines Katapultausgangs
Shock absorber for a catapult output

(30) Priorité: 18.10.1995 FR 9512231
(43) Date de publication de la demande: 23.04.1997
(73) Titulaire: DASSAULT AVIATION, F-75008 Paris (FR)
(72) Inventeur: Perrier, Philippe, 78860 Saint Nom la Breteche (FR)
(74) Mandataire: Colas, Jean-Pierre

(56) Documents cités:
- DE-A- 3 437 073
- FR-A- 758 548
- GB-A- 725 467
- GB-A- 1 549 430
- US-A- 2 240 947
- US-A- 2 759 688
- US-A- 3 273 830

## Description

La présente invention est relative à un dispositif de traction temporaire destiné à imprimer à une masse mobile une très forte accélération et à réduire au minimum les effets mécaniques néfastes auxquels la masse mobile risque d'être soumise lorsqu'en fin d'accélération, le couplage entre cette masse et le dispositif de traction temporaire est rompu.

Plus précisément, l'invention concerne un dispositif perfectionné de catapultage pour porte-avions, capable, sinon d'éliminer, du moins de réduire considérablement les effets nuisibles subis par le train avant et l'ensemble de la structure et des équipements de l'avion, lorsque ce train avant se détache du croc de la catapulte en bout de la piste d'envol du porte-avions.

La catapulte d'un porte-avions a pour fonction de communiquer à l'avion une très forte accélération sur une courte distance, afin de lui permettre d'atteindre sa vitesse de vol sur une longueur compatible avec les dimensions du porte-avions.

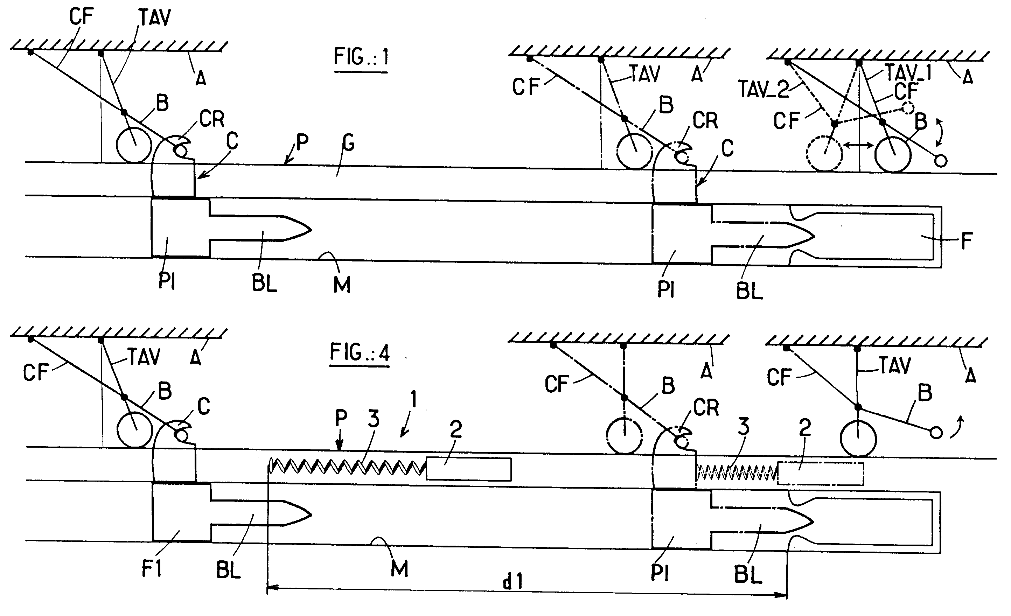

La figure 1 des dessins annexés représente très schématiquement deux configurations de fonctionnement d'une telle catapulte de la technique antérieure ainsi que les effets que subit le train avant de l'avion pendant le catapultage.

On voit qu'une telle catapulte comprend en général un équipage mobile appelé "chariot" C muni d'un croc CR ouvert vers la proue du porte-avions (à droite sur la figure 1) et dépassant au dessus du pont d'envol P pour pouvoir être accroché à un organe de couplage ou "barre de catapultage" B solidaire du train avant TAV de l'avion A.

Pour la description détaillée d'un exemple de réalisation d'un train avant équipé d'une telle barre de catapultage, on peut se référer au brevet US n° 4 401 285.

La catapulte comprend également un dispositif de guidage G du chariot C associé à un dispositif de traction M permettant d'appliquer au chariot une force de traction égale à plusieurs fois le poids de l'avion A à catapulter. Le dispositif de traction comprend en général un ou plusieurs cylindres susceptibles d'être mis sous pression d'un gaz (généralement de la vapeur d'eau) et capable ainsi de propulser des pistons PI couplés au chariot C. L'énergie fournie au chariot peut également être d'une autre nature, par exemple électrique, électromagnétique ou autres.

La catapulte comporte également un dispositif d'arrêt ou de freinage F du chariot en fin de course. On vise à réduire autant que possible la longueur de ce dispositif, afin de pouvoir excercer la force de traction du croc CR le plus longtemps possible, une longueur de 1 à 2 mètres étant une valeur couramment pratiquée (que l'on peut comparer à la longueur totale de la catapulte qui peut être de l'ordre de 50 à 100 m). Le dispositif de freinage F provoque ainsi une chute très brutale de la force de traction. Il s'écoule en général moins de cinq millisecondes entre l'instant où le chariot entre dans le frein et l'instant où l'effort de traction s'annule dans la barre de catapultage B de l'avion A.

Or, pendant la traction de la catapulte, la structure de l'avion A, et tout particulièrement le train avant, est mise en tension par l'effort de traction, les forces d'inertie et éventuellement d'autres forces telles que la poussée du ou des moteurs et les forces aérodynamiques. Lorsque l'effort de traction cesse, instantanément, tous les éléments sous tension se relâchent, ce qui induit des oscillations amorties, à la façon d'un ressort bandé que l'on libère. Ce phénomène, appelé "retour élastique" par les spécialistes, est illustré (de façon très exagérée) à droite sur la figure 1 des dessins annexés, respectivement par les deux positions extrêmes TAV-1 et TAV-2 que pourra prendre alternativement le train avant juste après avoir quitté le croc CR.

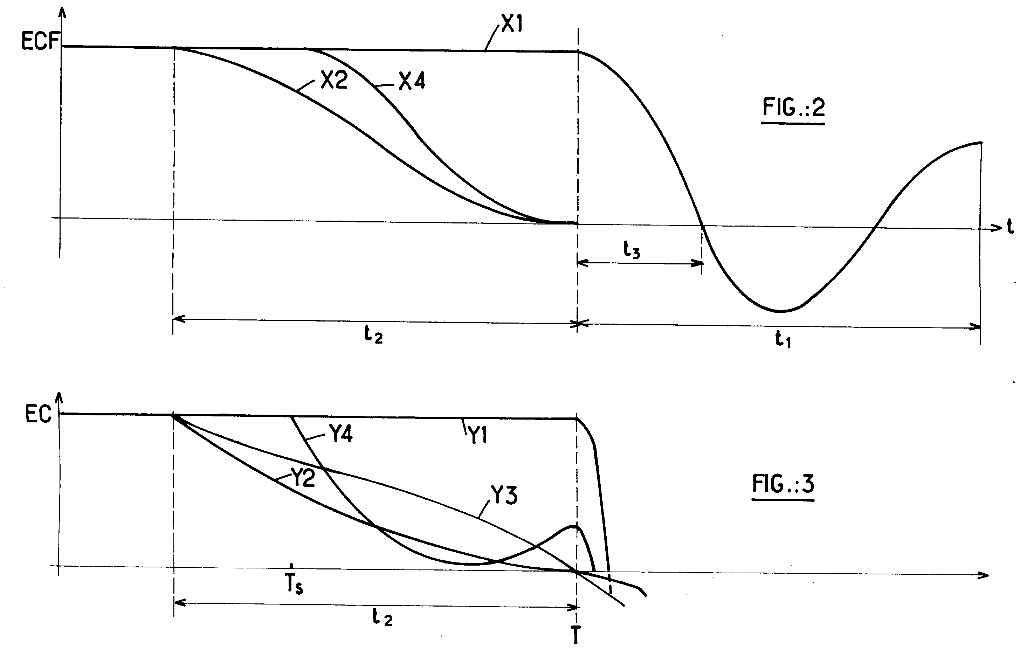

On peut également se référer aux figures 2 et 3 sur lesquelles les courbes X1 et Y1 représentant d'une part l'effort ECF relevé dans un élément CF de connexion du train avant à la structure de l'avion (appelé aussi "contre-fiche"), et d'autre part l'effort de traction EC de la catapulte.

En effet, pour les effets que l'on considère ici, le train avant TAV peut être assimilé à un système masse-ressort dans lequel la masse est constituée par le train lui-même et le ressort par la contre-fiche CF. Pendant la course de la catapulte, l'effort de traction EC de la catapulte se transmet directement dans la contre-fiche (selon la courbe Y1 de la figure 3) moyennant l'allongement de celle-ci correspondant au déplacement du train avant TAV par rapport à sa position d'équilibre (voir le croquis de gauche de la figure 1).

Les efforts EC et ECF sont à peu près constants et égaux pendant la course de la catapulte. Lorsque le chariot C entre dans le dispositif de freinage F (voir le croquis du milieu de la figure 1), sa décélération est telle que l'effort de traction EC s'annule très rapidement, typiquement en moins de 5 ms.

Dès que l'effort de traction s'annule, la barre de catapultage B se sépare du croc CR qui continue à décélérer. L'ensemble train avant/contre-fiche se comporte alors comme un système masse-ressort libéré hors de sa position d'équilibre.

Le retour à l'état de repos par rapport à la structure de l'avion se fait par des oscillations plus ou moins amorties, comme le montre la figure 2 pour la contre-fiche CF. Ce sont ces oscillations qui se transmettent à l'ensemble de l'avion sous forme de chocs.

Le phénomène illustré ici pour ce qui concerne le train avant à la figure 1 se produit de façon analogue pour toutes les parties élastiques de l'avion déplacées de leur position d'équilibre sous l'effet de l'accélération et brusquement libérées lors de la séparation de la barre de catapultage B avec le croc CR.

La fréquence des oscillations dans les éléments concernés est généralement de quelques dizaines de Hertz. Par exemple, pour une fréquence de 50 Hertz, le premier passage par la position d'équilibre a lieu cinq millisecondes après le lâcher de l'élément correspondant. Ce délai (t3 sur la figure 2) est comparable au temps de chute de l'effort de traction due au freinage du chariot. Ceci signifie que l'arrêt du chariot "accompagne " sensiblement le mouvement de retour élastique, mais ne s'y oppose pas. Etant donné les énergies mises en jeu, ces oscillations constituent un choc potentiellement endommageant pour tous les équipements de l'avion.

Le retour élastique a également pour effet de charger certains éléments de la structure du train avant ou de l'avion dans son ensemble, en sens inverse de celui dans lequel ils travaillent pendant la traction de la catapulte. Par exemple, la contre-fiche CF travaille en compression, lorsque le train avant TAV est dans la position TAV2.

De ce fait, les avions équipant des forces aéronavales doivent être pourvus de dispositions spéciales de renforcement non seulement de la structure même, mais également de beaucoup d'équipements, en particulier ceux qui sont situés dans la zone concernée par le retour élastique du train avant. Or, cette zone comprend généralement de nombreux équipements fragiles tels que le radar et les équipements du poste de pilotage. Il en résulte un surcoût considérable induit uniquement par la nécessité que l'avion et ses équipements doivent tenir au choc de fin de catapultage. La durée de vie et la fiabilité de ces équipements peuvent également être affectées par les effets répétés des chocs.

La barre de catapultage B pour sa part doit se relever automatiquement dès que le croc CR l'a lâchée. Les oscillations évoquées ci-dessus risquent de perturber ce relevage et de rabattre la barre B vers le bas alors que le train avant n'a pas encore quitté le pont d'envol. Ceci constitue un réel potentiel de danger voire d'accident, car l'impact de la barre B sur le pont peut conduire à la rupture de certains éléments du train avant TAV ou à la projection de débris vers le ou les moteurs de l'avion.

L'intensité du choc en fin de catapultage dépend directement de l'effort de traction de la catapulte juste avant l'entrée du chariot dans le dispositif de freinage F. Cet effort dépend lui-même essentiellement de la masse de l'avion à catapulter et de la vitesse que l'on doit lui communiquer pour permettre son envol.

Pour une configuration aérodynamique donnée d'un avion, plus la masse est importante, plus la vitesse nécessaire pour en permettre l'envol est importante. On voit donc que pour un avion donné, le choc de sortie de catapulte sera le plus important pour les configurations les plus lourdes.

Ainsi, pour les avions actuellement en service, les masses peuvent varier de quelques tonnes à quelques dizaines de tonnes et les vitesses de sortie de catapulte peuvent se situer entre 50 et 100 m/sec, environ. Pour un même avion et suivant ses configurations, la masse de catapultage peut même varier dans un rapport proche de 2.

On conçoit donc que les effets nuisibles des oscillations lors du lâcher du croc de catapulte peuvent être considérables.

Il est à noter que pour réduire les effets des oscillations, il est possible de réduire l'effort de traction bien avant que le chariot C n'entre dans le dispositif de freinage F. Par exemple, les catapultes fonctionnant avec de la vapeur d'eau sous pression comprennent généralement un dispositif de coupure qui interrompt l'admission de la vapeur, lorsque le chariot C atteint un certain point de sa course avec par voie de conséquence une diminution de l'effort de traction et donc du choc de fin de course. Toutefois, cette chute d'effort ne dépasse généralement pas 10 à 20 % pour ne pas perdre en efficacité de catapultage. Cette mesure, qui en fait vise surtout à économiser de la vapeur d'eau ne peut en tout cas nullement éviter au constructeur de l'avion de renforcer les structures et de prendre des précautions pour protéger les équipements fragiles de l'avion contre les chocs dus au catapultage.

L'invention a pour but de fournir un dispositif de traction temporaire destiné à imprimer à une masse mobile une très forte accélération, sans qu'au lâcher de l'effort de traction temporaire, la masse mobile ne subisse des effets nuisibles dus aux oscillations mécaniques engendrés. L'invention s'applique en particulier dans le cadre d'une catapulte pour porte-avions.

L'invention a donc pour objet un dispositif du genre indiqué au début du présent mémoire, comprenant un dispositif de guidage, un chariot monté coulissant par rapport à ce dispositif de guidage, un dispositif moteur pour imprimer audit chariot un mouvement d'accélération le long de ce dispositif de guidage dans une direction s'étendant dans la direction d'accélération de ladite masse et des moyens de couplage pour permettre de solidariser temporairement ladite masse et ledit chariot au cours de leur accélération, ledit dispositif de traction comportant également un dispositif de freinage pour, à la fin de l'accélération de ladite masse, freiner ledit chariot et rompre la connexion entre celui-ci et ladite masse, celle-ci étant composée d'éléments reliés entre eux de façon élastique et susceptibles de se déplacer les uns par rapport aux autres sous l'effet de l'effort de traction, caractérisé en ce qu'il comprend également un dispositif de modulation de l'effort de traction qui est agencé pour, à l'instant où la connexion entre ladite masse et ledit chariot est rompue, amener les éléments de ladite masse à l'état de repos les uns par rapport aux autres ou proches de cet état de repos.

Dans le contexte de l'invention, on entend par "état de repos", la situation dans laquelle les éléments composant la masse sont sensiblement immobiles les uns par rapport aux autres et n'excercent les uns sur les autres sensiblement aucun effort parasite.

Si on compare ces éléments de la masse à un système composé d'un premier élément formant la masse proprement dit et d'un second élément formant ressort et constitué par les parties de structure reliant les parties de masse entre eux, on peut dire qu'en étant sollicité, ce système emmagasine de l'énergie présentant deux composantes:
d'une part, une énergie potentielle caractérisée par la tension dans le second élément et donc par l'écart entre la position du premier élément à un instant donné et sa position sans sollicitation, et
d'autre part, une énergie cinétique caractérisée par la vitesse de déplacement de ce premier élément.

Transposé au cas particulier de l'avion, le premier élément est par exemple le train avant TAV et le second élément la contre-fiche CF formant "ressort".

Lorsque le premier élément est écarté de sa position d'équilibre (par l'effort de traction qui doit accélérer l'ensemble de la masse), il acquiert de l'énergie potentielle. Lorsqu'on lâche alors instantanément le premier élément à partir de cette position sollicitée, il se déplace vers la position d'équilibre tout en acquérant de plus en plus de vitesse de telle sorte qu'au passage de la position d'équilibre, la vitesse est telle que son énergie cinétique est voisine de l'énergie potentielle qu'il avait dans la position sollicitée (Une légère diminution provient des frottements produits par le mouvement). Ainsi, l'état de repos des éléments de la masse correspond à la situation où la vitesse du premier élément est nulle et l'effort exercé sur le second élément par le premier élément est également nul, l'énergie totale du système étant ainsi nulle.

Or, grâce aux caractéristiques de l'invention que l'on vient de définir ci-dessus, les éléments composant la masse ne sont plus sollicités les uns par rapport aux autres et se trouvent donc à l'état de repos décrit ci-dessus. Dans le cas de l'application particulière de l'invention à une catapulte pour porte-avions, le dispositif de modulation fait en sorte qu'en fin de catapultage, notamment le train avant de l'avion (comparable audit premier élément) et la contre-fiche (représentant ledit second élément) ne se sollicitent peu ou plus du tout mutuellement, alors que l'avion vu globalement a acquis sa vitesse de vol.

D'autres caractéristiques et avantages de l'invention apparaîtront au cours de la description qui va suivre, donnée uniquement à titre d'exemple et faite en se référant aux dessins annexés sur lesquels:
- la figure 1, déjà commentée ci-dessus, est un schéma très simplifié du fonctionnement d'une catapulte de porte-avions selon la technique antérieure;
- la figure 2 est un diagramme en fonction du temps de l'effort subi par la contre-fiche du train avant de l'avion sous l'action tant d'une catapulte de la technique antérieure que de celle réalisée selon l'invention;
- la figure 3 est un diagramme en fonction du temps de l'effort de traction exercé sur le train avant par une catapulte de la technique antérieure et par celle selon l'invention;
- la figure 4 est un schéma très simplifié d'une catapulte selon l'invention;
- les figures 5A, 5B et 5C montrent par des vues partielles en perspective trois configurations que présente un premier mode de réalisation d'une catapulte selon l'invention au cours de son fonctionnement;
- les figures 6A, 6B et 6C montrent trois vues analogues à celles des figures 5A, 5B et 5C d'un second mode de réalisation de l'invention; et
- les figures 7, 7A et 8 à 10 montrent cinq autres modes de réalisation de la catapulte selon l'invention.

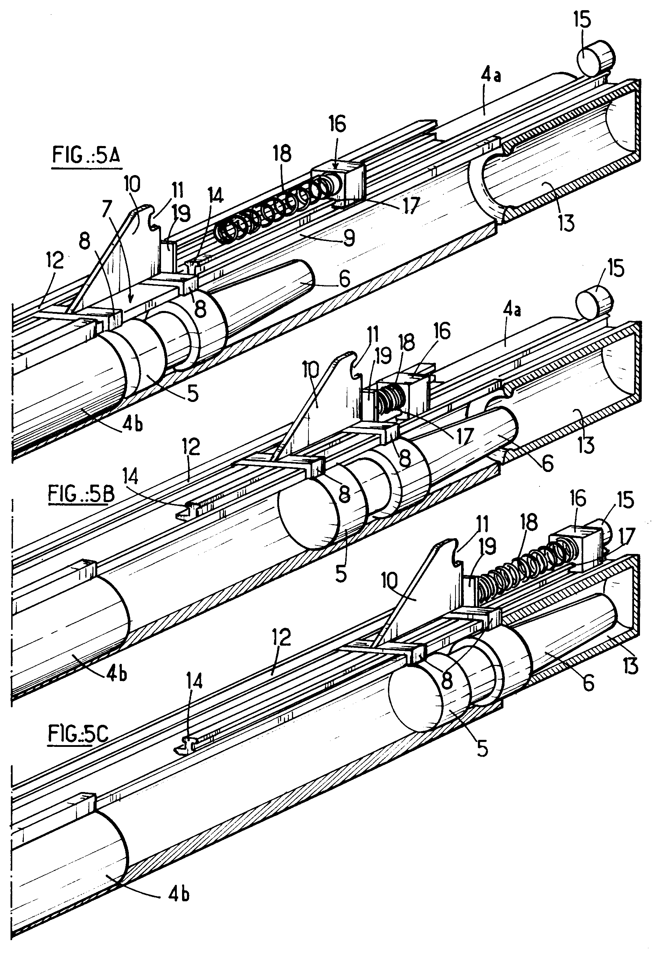

La figure 4 représente schématiquement le concept selon l'invention sous la forme d'un premier mode de réalisation.

On retrouve sur ce schéma les éléments déjà décrits à propos de la figure 1 auxquels on a affectés les mêmes références littérales.

Cependant, selon l'invention, la catapulte schématisée sur la figure 4 comprend également un dispositif de modulation désigné globalement par la référence numérique 1 et comprenant essentiellement une masselotte 2 montée coulissante dans le dispositif de guidage G et pourvue d'un élément élastiquement compressible 3 qui s'étend vers l'arrière dans ce dispositif de guidage G, c'est-à-dire dans le sens contraire à celui dans lequel s'excerce la force de traction de la catapulte.

Au cours du fonctionnement, le dispositif de modulation 1 est placé dans le dispositif de guidage G de manière que l'extrémité postérieure de l'élément compressible 3 se trouve à une distance prédéterminée d1 de l'entrée du dispositif de freinage F.

Lorsque le chariot C mis en mouvement par la force motrice percute cette extrémité, de l'énergie cinétique est communiquée au dispositif de modulation 1 dont l'élément élastique 3 commence à se comprimer et ce faisant commence à déplacer la masselotte 2 vers l'avant. L'absorption d'énergie ainsi réalisée a pour effet de réduire progressivement l'effort de traction qu'excerce le croc CR sur la barre de catapultage B selon une courbe représentée en Y2 sur la figure 3. Cette réduction de l'effort de traction a pour conséquence une réduction concommittante de l'effort dans la contrefiche CF de l'avion A selon la courbe X2 de la figure 2. Selon l'invention, les paramètres mis en jeu sont choisis de telle manière qu'à l'instant même où le belier BL commence à entrer dans le dispositif de freinage F, comme le représentent les figures 2 et 3 à l'instant T. l'effort de traction EC (fig 3) et l'effort ECF dans la contre-fiche CF (figure 2) deviennent nuls, pendant que la vitesse de déplacement du train avant par rapport à l'avion s'annule. Comme c'est à cet instant T que la barre de catapultage B et bien entendu l'ensemble de l'avion commencent à avoir une vitesse supérieure à celle du chariot C, le train avant TAV et les éléments de structure de l'avion A sont dans un état désormais non sollicité par la catapulte.

Il en résulte une élimination des oscillations nuisibles de sorte que le constructeur de l'avion n'a plus à se préoccuper d'un renforcement de structure ou d'une protection particulière des équipements de l'avion.

En outre, la barre de catapultage B ne risque pas de heurter le pont d'envol et pourra être relevée en toute sécurité au cours des premiers instants suivant le décollage.

Pour annuler à l'instant T l'effort de traction et l'effort dans la contrefiche, quatre paramètres sont déterminants: la masse de la masselotte 2, la raideur et la compression initiale de l'élément élastique 3 et la distance dl entre l'entrée du dispositif de freinage F et la position initiale de l'extrémité arrière de cet élément élastique 3.

Le choix de ces quatre paramètres détermine le déroulement dans le temps du fonctionnement de la catapulte. En se reportant à la figure 2, on voit que les oscillations propres du train avant (assimilables à celles dans la contre-fiche CF) ont une période t1 qui, pour fixer les idées et en fonction du type d'avion concerné, peut être de l'ordre de quelques dizaines de millisecondes, typiquement de 20 ms.

Il s'est avéré que, pour obtenir l'annulation des efforts au temps T, il est avantageux de choisir l'intervalle de temps t2 devant s'écouler entre l'instant où le chariot C heurte la masselotte et l'instant T, à une valeur située entre le tiers et le double de la période t1. Dans l'exemple choisi, cet intervalle se situerait donc entre 6 et 40 ms et serait choisi de préférence à 35 ms pour un avion de masse et de configuration données.

Les paramètres mentionnés ci-dessus peuvent facilement être réglés, même au cours de l'utilisation de la catapulte. Ainsi, par exemple, le dispositif de modulation 1 peut être monté mobile dans le dispositif de guidage G en étant doté par exemple de roulettes et d'un moteur d'entraînement autonome. Par ailleurs, on peut prévoir une masselotte composée de plusieurs masses élémentaires que l'on pourra disposer dans le dispositif de guidage G en fonction des besoins. L'ajustement de la compression initiale de l'élément élastique 3, avantageusement réalisé sous la forme d'un ressort hélicoïdal, peut être obtenu par une butée (non représentée) placée en arrière de ce ressort et reliée à la masselotte 2 par une vis (également non représentée) permettant de régler la longueur maximale du ressort.

Dans l'exemple qui vient d'être décrit, les paramètres sont choisis de telle sorte qu'en début de freinage, les efforts ECF et EC deviennent nuls en même temps que la vitesse de déplacement du train avant TAV par rapport à la structure de l'avion s'annule. Toutefois, la diminution ainsi provoquée de l'effort de traction diminue également l'efficacité globale de la catapulte.

Dans le but de réduire le moins possible les performances de la catapulte, les paramètres du dispositif de modulation selon l'invention peuvent également être réglés pour que l'effort de traction EC après avoir diminué dans un premier temps, réaugmente légèrement juste avant le moment où le chariot commence à freiner. (Voir la courbe Y4 sur la figure 3). De cette manière, le fléchissement de l'effort de traction peut intervenir plus tard, tandis que le train avant TAV peut néanmoins rapidement retourner à la position de repos avant la séparation avec le croc CR (voir courbe X4 sur la figure 2).

Pour obtenir cette courbe de modulation Y4, on choisira pour l'élément élastique ou ressort 3 une raideur plus importante, tandis que l'ensemble du dispositif de modulation est placé plus près de l'entrée du dispositif de freinage F que dans le cas précédent. L'augmentation de l'effort de traction est obtenue par la détente du ressort après qu'il soit passé par un maximum de compression.

On va maintenant se référer aux figures 5A à 5C pour décrire un mode de réalisation concret du dispositif de traction temporaire selon l'invention dans son application à une catapulte pour porte-avions.

Cette catapulte comprend deux cylindres 4a et 4b juxtaposés s'étendant longitudinalement par rapport à la direction de la piste d'envol du porte-avions en dessous du pont supérieur de celui-ci. Leur longueur peut atteindre cinquante à cent mètres par exemple.

Un piston 5 (l'un d'entre eux seulement est visible sur les figures) coulisse dans chaque cylindre 4a, 4b sous l'action de la vapeur d'eau sous pression qui est injectée à leur extrémité amont par une installation d'injection connue en soi et non représentée aux dessins.

Chaque piston 5 porte un bélier 6 se présentant sous la forme d'un tronc de cône s'étendant du côté aval.

En outre, chaque piston est solidaire d'un chariot unique 7 par l'intermédiaire d'éléments de connexion 8 passant vers le haut à partir du piston respectif à travers une fente longitudinale 9 pratiquée tout le long de chaque cylindre 4a, 4b. Un joint longitudinal (non représenté et pouvant être du type décrit dans le brevet US 4 252 285) permet d'assurer l'étanchéité des cylindres, tout en permettant le passage du chariot pendant le fonctionnement de la catapulte.

Le chariot solidaire des deux pistons 5 est ainsi guidé par le mouvement de chacun de ceux-ci dans leur cylindre respectif 4a, 4b et éventuellemnt par d'autres moyens de guidage connus en soi.

Un élément 10 pourvu d'une encoche 11 sur son bord aval et fixé solidairement sur le chariot 7 fait office de croc et passe à travers une fente non visible sur les figures 5A, 5B et 5C) ménagée dans le pont du porte-avions.

L'extrémité aval (donc en bout de la piste d'envol) de chaque cylindre 4a, 4b est obturée par un dispositif de freinage 13 fonctionnant sur le principe de l'expulsion d'eau lorsque le bélier 6 du piston 5 y pénètre.

On remarquera que la structure qui vient d'être décrite est classique et utilisée habituellement dans les catapultes pour porte-avions.

Selon l'invention, un rail 14 est fixé entre les deux cylindres 4a et 4b. Il s'étend parallèlement aux cylindres vers l'arrière sur une distance prédéterminée à partir de l'extrémité aval de la catapulte où il est pourvu d'un heurtoir 15.

Une masselotte 16 est montée coulissante sur le rail 14, tout en étant guidée sur celui-ci au moyen d'une rainure 17 de forme complémentaire à ce rail 14 et ménagée dans la masselotte 16. Un ressort hélicoïdal 18 est fixé sur la masselotte 16 en s'étendant vers l'arrière parallelément aux axes des cylindres 4a et 4b. Ce ressort est destiné à coopérer avec une plaque de percussion transversale 19 fixée contre le bord avant de la plaque d'accrochage 10 du chariot 7.

Le fonctionnement de cette catapulte apparaît à l'examen des figures 5A à 5C qui en représentent trois phases.

Sur la figure 5A, le chariot 7 a été lancé (l'avion n'est pas représenté) et est en train de parvenir dans la zone du dispositif de modulation 1. Le ressort hélicoïdal 18 est encore détendu et la masselotte 16 est encore immobilisée sur son rail 14.

Sur la figure 5B, la plaque 19 a comprimée le ressort 18 qui à son tour a fait avancer la masselotte 16 sur son rail 14. L'extrémité avant du belier 6 se trouve juste à l'entrée du dispositif de freinage 13. Cette figure correspond à l'instant T des figures 2 et 3; les efforts ECF et EC sont alors devenus nuls et le train avant TAV quitte le croc 10, 11 sans subir aucune oscillation.

Sur la figure 5C, la catapulte est parvenue en fin de course. Le bélier 6 est entièrement engagé dans le dispositif de freinage 13 et donc arrêté, la masselotte 16 étant en butée contre le heurtoir 15 et le ressort 18 est de nouveau détendu.

Le chariot 7 peut être ramené en arrière jusqu'aux extrémités opposées des cylindres 4a et 4b, et le dispositif de modulation replacé à la position de la figure 5A pour que la catapulte puisse commencer un nouveau cycle d'utilisation.

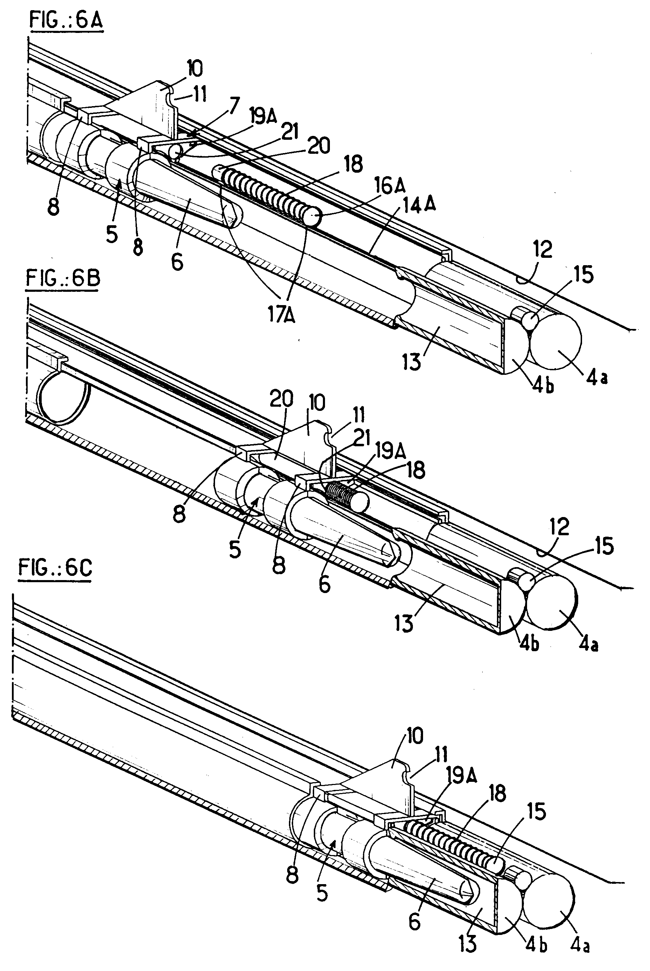

Les figures 6A à 6C représentent une variante de l'invention dans laquelle la masselotte 16A est formée d'un corps généralement cylindrique coulissant sur un rail 14A disposé entre les cylindres 4a et 4b. Ce corps cylindrique comporte une tige de guidage 20 sur laquelle est enfilé le ressort hélicoidal 18 dont on évite ainsi le flambage au cours de sa compression. De plus, ce corps cylindrique est équipé à chacune de ses extrémités de ferrures 17A adaptées au rail 14 pour permettre son guidage le long de ce rail.

Par ailleurs, le chariot 7 porte une plaque de percussion 19A dans laquelle est prévue une ouverture 21 pour laisser passer la tige de guidage 20 de la masselotte 16A.

Les figures 6A à 6C représentent la catapulte selon cette variante dans les mêmes positions respectives que les figures 5A à 5C.

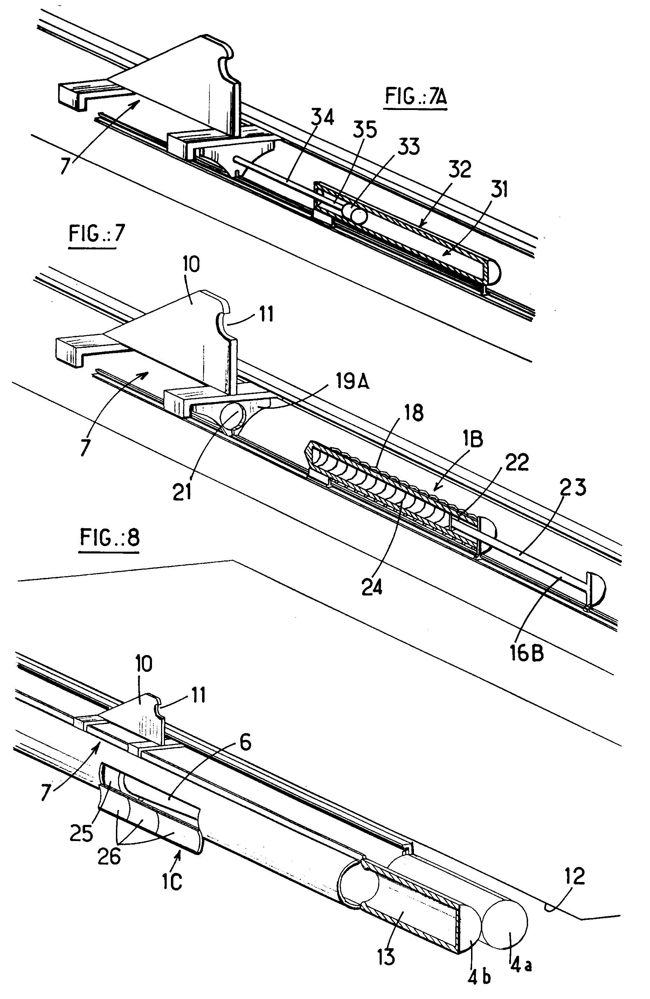

La figure 7 représente une autre variante de l'invention dans laquelle la masselotte 16B est formée par un corps téléscopique avec un cylindre 22 et un piston 23 guidé dans ce cylindre. Le ressort 18 est enfilé autour du cylindre 22, tandis qu'un ressort supplémentaire 24 est placé à l'intérieur de celui-ci. Un liquide contenu dans le cylindre permet d'obtenir un effet d'amortissement en passant d'un côté à l'autre du piston 23. Cet agencement permet d'amortir le choc de l'ensemble 1B contre le heurtoir 15.

La figure 7A représente une autre variante de l'invention dans laquelle l'élément élastique du dispositif de modulation est un ressort à gaz. Plus précisément, dans ce cas, l'effort de modulation est obtenu par compression d'un volume de gaz enfermé dans l'espace 31 délimité par un cylindre formant une masselotte 32. Celle-ci est montée sur la catapulte, par exemple comme l'est la masselotte 16A ou 16B.

Le cylindre est fermé à sa partie aval et obstrué à sa partie amont par un piston 33. Le chariot 7 est équipé d'un bélier 34 s'étendant vers l'aval et susceptible de pénétrer dans la masselotte 32 à travers la paroi d'extrémité amont 35 de cette dernière pour repousser le piston 33 et ainsi comprimer le volume de gaz. La longueur du bélier 34 correspond sensiblement à la course du piston 33 à l'intérieur de l'espace 31.

Dans cette variante, il est avantageux que le volume de gaz contenu dans le l'espace 31 soit précomprimé de façon qu'un effort de modulation significatif puisse s'exercer dès le début du mouvement du piston 33.

Ainsi, par exemple pour fixer les idées et pour un avion et une catapulte donnés, l'espace 31 peut avoir une longueur de 1 à 2 m et le gaz peut être précomprimé à une pression de quelques dizaines à quelques centaines de barres, le bélier 34 pouvant avoir une longueur d'environ 1 à 2 m.

La figure 8 montre un autre mode de réalisation dans lequel le dispositif de modulation 1C est formé par un ou plusieurs évents 25 pratiqués dans la paroi des cylindres 4a et 4b près de leurs extrémités aval. Ces évents peuvent éventuellement être obturables par des volets 26. Ils ont pour rôle de créer une fuite délibérée, de préférence réglable, dans les cylindres 4a et 4b afin d'y réduire la pression de vapeur et ainsi l'effort que le piston 5 peut imprimer au chariot 7. En répartissant judicieusement ces évents sur la longueur des cylindres, on peut obtenir une courbe de modulation telle que celle représentée en Y3 sur la figure 3 et arriver à créér des efforts nuls à l'instant T. La figure 8 montre également une partie du pont du porte-avions ainsi qu'un bord de la fente 12 qui y est ménagée pour la catapulte.

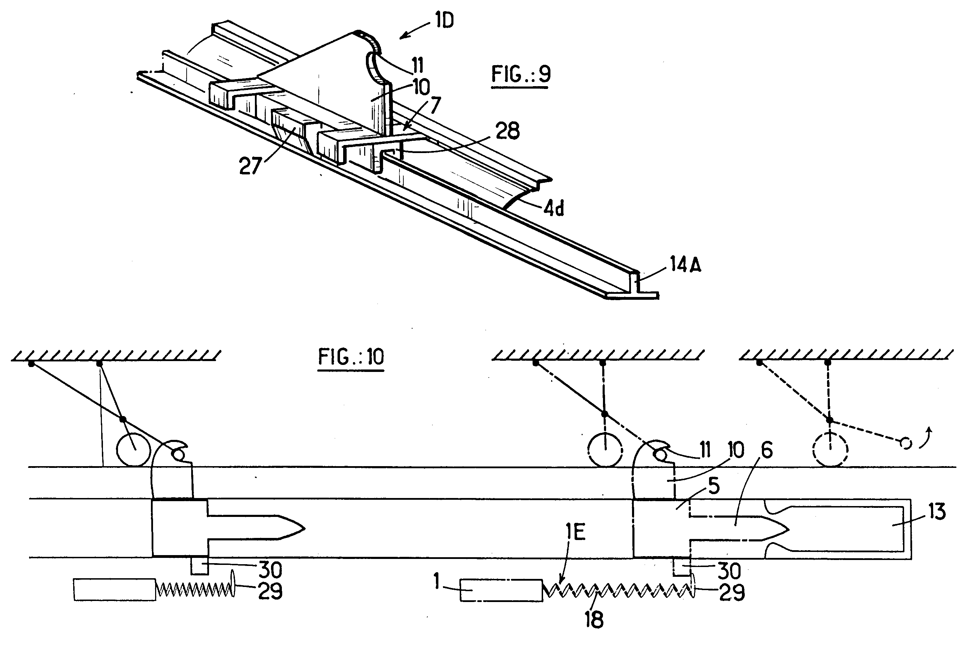

La figure 9 représente schématiquement un autre mode de réalisation de l'invention dans lequel un dispositif de modulation 1D permet de moduler l'effort de traction par une action de freinage d'une partie solidaire du chariot 7 sur une partie solidaire des cylindres 4a et 4b de la catapulte.

Ainsi, un rail 14A ayant un profil en T inversé est solidaire des deux cylindres 4a et 4b en s'étendant entre ceux-ci comme le rail 14 décrit précédemment. Dans ce cas, le chariot 7 est équipé d'un élément (symbolisé en 27 sur la figure 9) permettant d'appliquer l'effort de freinage sur le rail 14A.

Cet effort de freinage peut être de différents natures. Par exemple, le chariot 7 peut être pourvu d'un ou de plusieurs patins de frein agissant par frottement sur le rail 14A et actionnés par un dispositif de commande approprié connu en soi. Le frein peut alors se présenter avantageusement sous la forme d'une mâchoire 28 comme représenté schématiquement sur la figure 9.

Une variante de ce mode de réalisation consiste à équiper le chariot d'un générateur d'un champ magnétique dirigé perpendiculairement à la partie verticale du rail 14A, comme un électro-aimant ou un aimant permanent capable d'engendrer dans le rail 14A des courants de Foucault pendant le mouvement du chariot 7. L'utilisation d'un électro-aimant permettra de réguler aisément l'effort de freinage par ajustement du courant électrique d'aimantation.

Enfin, selon le mode de réalisation de la figure 10, le dispositif de modulation 1E selon l'invention est du type représenté sur les figures 4 à 5C, à ceci près que la masselotte 16 est placée à l'arrière du ressort 18, celui-ci étant muni d'un organe d'accrochage 29 coopérant avec une patte de percussion 30 prévue sur le piston 5. Cet ensemble est logé en-dessous des cylindres 4a et 4b.

Dans ce cas l'équipage formé par le dispositif de modulation 1E est tiré par le chariot 7 au lieu d'être poussé ce qui ne change pas fondamentalement son fonctionnement.

On constate donc que, grâce à l'invention, l'ajustement des paramètres de fonctionnement du dispositif de modulation permet d'obtenir un compromis satisfaisant entre les différentes conditions de fonctionnement que doit assumer la catapulte en matière de masse entraînée et de vitesse de vol des avions embarqués et de leurs configurations de vol, sans que les structures de ces avions aient à être adaptées spécialement en vue du choc de sortie de catapulte.

Bien que l'invention ait été décrite dans son application spécifique à une catapulte pour porte-avions, on comprend qu'elle peut être utilisée dans tous les cas où un objet doit être accéléré temporairement, puis laissé libre pour poursuivre son mouvement. De même, on conçoit que les concepts de l'invention peuvent s'appliquer que le mouvement de l'objet soit rectiligne ou courbe.

En particulier, l'invention peut s'appliquer avantageusement dans tous les cas où l'objet à accélérer est un ensemble complexe présentant des parties sensibles au choc de fin d'accélération. Ce peut être le cas, par exemple, de satellites, de missiles, de torpilles ou d'objets destinés à des essais en laboratoire. Pour ces applications, on adaptera les caractéristiques de l'invention aux caractéristiques physiques de l'objet (masse, vitesse, accélération, période des oscillations dues au choc) au moyen des règles classiques de la mécanique.

## Revendications

1. Dispositif de traction temporaire destiné à imprimer à une masse mobile (A, TAV, CF) une très forte accélération, comprenant un dispositif de guidage (8,9), un chariot (7) monté coulissant par rapport à ce dispositif de guidage (8, 9), un dispositif moteur (4a, 4b, 5) pour imprimer audit chariot (7) un mouvement d'accélération le long de ce dispositif de guidage (8, 9) dans une direction s'étendant dans la direction d'accélération de ladite masse (A, TAV, CF) et des moyens de couplage (10, 11) pour permettre de solidariser temporairement ladite masse (A, TAV, CF) et ledit chariot (7) au cours de leur accélération, ledit dispositif de traction comportant également un dispositif de freinage (13) pour, à la fin de l'accélération de ladite masse, freiner ledit chariot (7) et rompre la connexion entre celui-ci et ladite masse (A, TAV, CF), celle-ci étant composée d'éléments (TAV, CF) reliés entre eux de façon élastique et susceptibles de se déplacer les uns par rapport aux autres sous l'effet de l'effort de traction (EC), caractérisé en ce qu'il comprend également un dispositif de modulation (1; 1B; 1C; 1D) de l'effort de traction (EC) qui est agencé pour, à l'instant où la connexion entre ladite masse (A, TAV, CF) et ledit chariot (7) est rompue, amener les éléments (TAV, CF) de ladite masse (A, TAV, CF) à l'état de repos les uns par rapport aux autres ou proches de cet état de repos.

2. Dispositif de traction temporaire suivant la revendication 1, caractérisé en ce que ledit dispositif de modulation (1) comprend une masselotte (16; 16B; 32) montée en coulissement libre dans la direction de l'accélération de ladite masse (A, TAV, CF) entre ledit chariot (7) et ledit dispositif de freinage (13) et pourvu d'un élément élastique allongé (18; 31 à 35) s'étendant selon ladite direction d'accélération pour être percuté par ledit chariot (7) dans la phase finale de l'accélération avant que ladite connexion ne soit rompue.

3. Dispositif de traction temporaire suivant la revendication 2, caractérisé en ce que ledit élément élastique (18) est placé en amont de ladite masselotte (16) par rapport au sens d'accélération de ladite masse (A, TAV, CF) et en ce que ledit dispositif de modulation (1) est poussé par ledit chariot (7).

4. Dispositif de traction temporaire suivant la revendication 2, caractérisé en ce que ledit élément élastique (18) est placé en aval de ladite masselotte (16) par rapport au sens d'accélération de ladite masse (A, TAV, CF) et en ce que ledit dispositif de modulation (1) est tiré par ledit chariot (7).

5. Dispositif de traction temporaire suivant l'une quelconque des revendications 2 à 4, caractérisé en ce que ledit élément élastique (18) est un ressort hélicoîdal.

6. Dispositif de traction temporaire suivant la revendication 5, caractérisé en ce que ladite masselotte (16) comprend une tige de guidage (20) pour guider ledit ressort (18) lors de sa compression.

7. Dispositif de traction temporaire suivant l'une quelconque des revendications 2 et 3, caractérisé en ce que ledit élément élastique est un ressort à gaz (31 à 35).

8. Dispositif de traction temporaire suivant la revendication 7, caractérisé en ce que le gaz dans ledit ressort à gaz (31 à 35) est précomprimé.

9. Dispositif de traction temporaire suivant l'une quelconque des revendications 7 et 8, caractérisé en ce que ladite masselotte (32) délimite l'espace (31) dans lequel est enfermé le gaz, en ce qu'un piston (33) est monté coulissant dans ledit espace (31), et en ce que ledit chariot (7) porte un bélier (34) susceptible de repousser le piston dans ledit espace pour comprimer le gaz.

10. Dispositif de traction temporaire suivant l'une quelconque des revendications 2 à 9, caractérisé en ce que ladite masselotte (16B) comporte une amortisseur hydraulique (23, 24) pour amortir sa percussion contre un heurtoir (15) placé à l'extrémité aval de la course dudit dispositif de modulation (1B).

11. Dispositif de traction temporaire suivant l'une quelconque des revendications 2 à 10, caractérisé en ce que ladite masselotte comprend plusieurs masselottes élémentaires pouvant être mises en place ou enlevées en fonction de la configuration de ladite masse à accélérer (A, TAV, CF).

12. Dispositif de traction temporaire suivant l'une quelconque des revendications 2 à 11, caractérisé en ce qu'il comprend un dispositif de régulation de position pour permettre le réglage de la position dudit dispositif de modulation avant chaque lancement de ladite masse (A, TAV, CF).

13. Dispositif de traction temporaire suivant l'une quelconque des revendications 2 à 12, caractérisé en ce qu'il comprend également un dispositif pour, avant chaque lancement de ladite masse, ajuster la tension initiale dudit élément élastique (18; 31 à 35).

14. Dispositif de traction temporaire suivant la revendication 1, dans lequel ledit dispositif moteur comprend au moins un ensemble cylindre-piston (4a, 4b, 5) destiné à être mis sous la pression d'un gaz de propulsion, caractérisé en ce que ledit dispositif de modulation (1C) comprend au moins une ouverture (26) pratiquée dans ledit cylindre.

15. Dispositif de traction temporaire suivant la revendication 1 comprenant un dispositif de régulation dudit effort de traction, caractérisé en ce que ledit dispositif de modulation est intégré audit dispositif de régulation et en ce que la modulation est mise en oeuvre par régulation directe de cet effort de traction.

16. Dispositif de traction temporaire suivant la revendication 1, caractérisé en ce que ledit dispositif de modulation (1D) comprend un dispositif de freinage (27, 28) comportant un rail (14A) s'étendant dans la direction de ladite accélération dans la partie aval de la course dudit chariot (7), et un dispositif (27, 28) porté par ledit chariot (7) pour engendrer une force de freinage de celui-ci par rapport audit rail (14A).

17. Dispositif de traction temporaire suivant la revendication 16, caractérisé en ce que ledit dispositif (27, 28) porté par ledit chariot pour engendrer la force de freinage comprend au moins un patin de freinage pouvant être actionné pour agir sur ledit rail (14A).

18. Dispositif de traction temporaire suivant la revendication 17, caractérisé en ce que ledit dispositif (27, 28) porté par ledit chariot (7) pour engendrer une force de freinage comprend un générateur d'un champs magnétique pouvant être commandé pour agir sur ledit rail (14A) au moyen de courants de Foucault.

19. Catapulte pour porte-avions, caractérisé en ce qu'elle comprend un dispositif de traction temporaire selon l'une quelconque des revendications 1 à 18.

## Claims

1. A temporary towing device intended to impart a very high acceleration to a mobile mass (A, TAV, CF), the device comprising a guidance device (8, 9), a carriage (7) mounted so that it can slide with respect to this guidance device (8, 9), a motive device (4a, 4b, 5) for imparting a movement of acceleration to said carriage (7) along this guidance device (8, 9) in a direction running in the direction of acceleration of said mass (A, TAV, CF) and coupling means (8) for allowing said mass (A, TAV, CF) and said carriage (7) to be secured together temporarily as they are accelerated, said towing device also including a braking device (13) for braking said carriage (7) at the end of the acceleration of the said mass and for breaking the connection between it and said mass (A, TAV, CF), the latter being composed of elements (TAV, CF) joined together elastically and capable of being displaced with respect to one another under the effect of the towing force (EC), characterized in that it also comprises a device (1; 1B; 1C; 1D) for modulating the towing force (EC), which device is designed to bring the elements (TAV, CF) of said mass (A, TAV, CF) to the state of rest with respect to one another or close to this state of rest, the moment the connection between said mass (A, TAV, CF) and said carriage (7) is broken.

2. The temporary towing device as claimed in claim 1, characterized in that said modulation device (1) comprises a weight (16; 16B; 32) mounted so that it can slide freely in the direction of the acceleration of said mass (A, TAV, CF) between said carriage (7) and said braking device (13) and provided with an elongate elastic element (18; 31-35) running in said direction of acceleration so as to be struck by said carriage (7) in the final phase of the acceleration before said connection is broken.

3. The temporary towing device as claimed in claim 2, characterized in that said elastic element (18) is placed upstream of said weight (16) with respect to the direction of acceleration of said mass (A, TAV, CF) and said modulation device (1) is pushed by said carriage (7).

4. The temporary towing device as claimed in claim 2, characterized in that said elastic element (18) is placed downstream of said weight (16) with respect to the direction of acceleration of said mass (A, TAV, CF) and wherein said modulation device (1) is pulled by said carriage (7).

5. The temporary towing device as claimed in any one of claims 2-4 characterized in that said elastic element (18) is a helical spring.

6. The temporary towing device as claimed in claim 5, characterized in that said weight (16) comprises a guide rod (20) for guiding said spring (18) as it is compressed.

7. The towing device as claimed in any one of claims 2 and 3, characterized in that said elastic element is a gas spring (31-35).

8. The towing device as claimed in claim 7, characterized in that the gas in said gas spring (31-35) is precompressed.

9. The towing device as claimed in any one of claims 7 and 8, characterized in that said weight (32) defines a space (31) confining said gas, a piston (33) is slidably mounted within said space (31) and said carriage (7) comprises a ram (34) able to push the piston forward within said gas compressing space.

10. The temporary towing device as claimed in any one of claims 2-9, characterized in that said weight (16B) includes a hydraulic damper (23, 24) for deadening its impact against a buffer (15) placed at the downstream end of the travel of said modulation device (1B).

11. The temporary towing device as claimed in any one of claims 2-10, characterized in that said weight comprises several elemental weight which can be put in place or removed depending on the configuration of said mass to be accelerated (A, TAV, CF).

12. The temporary towing device as claimed in any one of claims 2-11, characterized in that it comprises a position-adjustment device for allowing the position of said modulation device to be adjusted each time before said mass (A, TAV, CF) is launched.

13. The temporary towing device as claimed in any one of claims 2-12, characterized in that it also comprises a device for setting the initial tension of said elastic element (18; 31 à 35) each time before said mass is launched.

14. The temporary towing device as claimed in claim 1, in which said motive device comprises at least one cylinder/piston assembly (4a, 4b, 5) intended to be pressurized by a propelling gas, said modulation device (1C) comprising at least one opening (26) made in said cylinder.

15. The temporary towing device as claimed in claim 1, comprising a device for adjusting said towing force, characterized in that said modulation device is incorporated into said adjustment device and the modulation is achieved by direct adjustment of this towing force.

16. The temporary towing device as claimed in claim 1, characterized in that said modulation device (1D) comprises a braking device (27, 28) including a rail (14A) running in the direction of said acceleration in the downstream part of the travel of said carriage (7), and a device (27, 28) borne by said carriage (7) for generating a force for braking this carriage with respect to said rail (14A).

17. The temporary towing device as claimed in claim 16, characterized in that said device (27, 28) borne by said carriage for generating the braking force comprises at least one brake shoe which can be actuated to act on said rail (14A).

18. The temporary towing device as claimed in claim 17, characterized in that said device (27, 28) borne by said carriage (7) for generating a braking force comprises a generator of a magnetic field which can be activated to act on said rail (14A) by means of eddy currents.

19. Catapult for an aircraft carrier characterized in that it comprises a temporary towing device as claimed in any one of claims 1-18.

## Patentansprüche

1. Vorrichtung zum zeitweiligen Ziehen, um einer beweglichen Masse (A, TAV, CF) eine sehr starke Beschleunigung mitzuteilen, mit einer Vorrichtung zum Führen (8, 9), einem verschiebbar bezüglich dieser Vorrichtung zum Führen (8, 9) angeordneten Wagen (7), eine Vorrichtung zum Antreiben (4a, 4b, 5), um dem Wagen (7) eine Beschleunigungsbewegung entlang dieser Vorrichtung zum Führen (8, 9) in einer Richtung mitzuteilen, die sich in der Richtung der Beschleunigung der Masse (A, TAV, CF) erstreckt, und Mitteln zum Kuppeln (10, 11), um zu ermöglichen, zeitweilig die Masse (A, TAV, CF) und den Wagen (7) im Verlauf ihrer Beschleunigung miteinander zu verbinden, wobei die Vorrichtung zum Ziehen ebenfalls eine Vorrichtung zum Bremsen (13) aufweist, um am Ende der Beschleunigung der Masse den Wagen (7) abzubremsen und die Verbindung zwischen diesem und der Masse (A, TAV, CF) zu unterbrechen, wobei diese aus Elementen (TAV, CF) zusammengesetzt ist, die untereinander elastisch und bezuglich einander unter der Wirkung der Zugkraft (EC) verschiebbar verbunden sind, dadurch gekennzeichnet, daß sie ebenfalls eine Vorrichtung zur Modulation (1; 1B; 1C; 1D) der Zugkraft (EC) aufweist, die eingerichtet ist, um im Moment, in dem die Verbindung zwischen der Masse (A, TAV, CF) und dem Wagen (7) unterbrochen wird, die Elemente (TAV, CF) der Masse (A, TAV, CF) in den Ruhezustand bezüglich einander oder nahe - diesen Zustand der Ruhe zu führen.

2. Vorrichtung zum zeitweiligen Ziehen gemäß Anspruch 1, dadurch gekennzeichnet, daß die Vorrichtung zum Modulieren (1) ein Gewicht (16; 16B; 32) aufweist, das frei in Richtung der Beschleunigung der Masse (A, TAV, CF) zwischen dem Wagen (7) und der Vorrichtung zum Bremsen (13) angeordnet, und mit einem elastischen länglichen Element (18; 31 bis 35) versehen ist, das sich entlang der Richtung der Beschleunigung erstreckt, um durch den Wagen (7) in der abschließenden Phase der Beschleunigung angefahren zu werden, bevor die Verbindung unterbrochen wird.

3. Vorrichtung zum zeitweiligen Ziehen gemäß Anspruch 2, dadurch gekennzeichnet, daß das elastische Element (18) bezüglich der Richtung der Beschleunigung der Masse (A, TAV, CF) oberhalb des Gewichtes (16) angeordnet ist und daß die Vorrichtung zum Modulieren (1) von dem Wagen (7) angetrieben ist.

4. Vorrichtung zum zeitweiligen Ziehen gemäß Anspruch 1, dadurch gekennzeichnet, daß das elastische Element (18) bezüglich der Richtung der Beschleunigung der Masse (A, TAV, CF) unterhalb des Gewichtes (16) angeordnet ist und daß die Vorrichtung zum Modulieren (1) von dem Wagen (7) gezogen ist.

5. Vorrichtung zum zeitweiligen Ziehen gemäß irgendeinem der Ansprüche 2 bis 4, dadurch gekennzeichnet, daß das elastische Element (18) eine Schraubenfeder ist.

6. Vorrichtung zum zeitweiligen Ziehen gemäß Anspruch 5, dadurch gekennzeichnet, daß das Gewicht (16) einen Führungszapfen (20) zum Führen der Feder (18) während ihrer Kompression aufweist.

7. Vorrichtung zum zeitweiligen Ziehen gemäß irgendeinem der Ansprüche 2 und 3, dadurch gekennzeichnet, daß das elastische Element eine Gasfeder (31 bis 35) ist.

8. Vorrichtung zum zeitweiligen Ziehen gemäß Anspruch 7, dadurch gekennzeichnet, daß das Gas in der Gasfeder (31 bis 35) vorgespannt ist.

9. Vorrichtung zum zeitweiligen Ziehen gemäß irgendeinem der Ansprüche 7 und 8, dadurch gekennzeichnet, daß das Gewicht (32) den Raum (31) begrenzt, in dem das Gas angeschlossen ist, und daß ein Kolben (33) verschiebbar in dem Raum angeordnet ist, und daß der Wagen (7) einen Rammkörper (34) trägt, der in der Lage ist, den Kolben in den Raum zurückzudrücken, um das Gas zu komprimieren.

10. Vorrichtung zum zeitweiligen Ziehen gemäß irgendeinem der Ansprüche 2 bis 9, dadurch gekennzeichnet, daß das Gewicht (16B) einen hydraulischen Dämpfer (23, 24) aufweist, um seinen Stoß gegen eine Prellvorrichtung (15) zu dämpfen, die am oberseitigen Ende des Weges der Vorrichtung zum Modulieren (1B) angeordnet ist.

11. Vorrichtung zum zeitweiligen Ziehen gemäß irgendeinem der Ansprüche 2 bis 10, dadurch gekennzeichnet, daß das Gewicht mehrere Gewichtselemente umfaßt, die in Abhängigkeit von der Anordnung der zu beschleunigenden Masse (A, TAV, CF) plaziert oder mitgenommen werden können.

12. Vorrichtung zum zeitweiligen Ziehen gemäß irgendeinem der Ansprüche 2 bis 11, dadurch gekennzeichnet, daß sie eine Vorrichtung zum Regulieren der Position umfaßt, um das Regulieren der Position der Vorrichtung zum Modulieren vor jedem Abschießen der Masse (A, TAV, CF) zu ermöglichen.

13. Vorrichtung zum zeitweiligen Ziehen gemäß irgendeinem der Ansprüche 2 bis 12, dadurch gekennzeichnet, daß sie ebenfalls eine Vorrichtung aufweist, um, vor jedem Abschießen der Masse die anfängliche Spannung des elastischen Elementes einzustellen (18; 31 bis 35).

14. Vorrichtung zum zeitweiligen Ziehen gemäß Anspruch 1, in der die Vorrichtung zum Antreiben zumindest eine Zylinder-Kolben-Anordnung (4a, 4b, 5) aufweist, die dazu bestimmt ist, unter den Druck eines Antriebsgases gesetzt zu werden, dadurch gekennzeichnet, daß die Vorrichtung zum Modulieren (1C) zumindest eine Öffnung (26) aufweist, die in den Zylinder eingearbeitet ist.

15. Vorrichtung zum zeitweiligen Ziehen gemäß Anspruch 1, die eine Vorrichtung zum Regulieren der Zugkraft aufweist, dadurch gekennzeichnet, daß die Vorrichtung zum Modulieren in die Vorrichtung zum Regulieren integriert ist und daß die Modulation durch direktes Regulieren dieser Zugkraft durchgeführt wird.

16. Vorrichtung zum zeitweiligen Ziehen gemäß Anspruch 1, dadurch gekennzeichnet, daß die Vorrichtung zum Modulieren (1D) eine Vorrichtung zum Bremsen (27, 28) umfaßt, die eine Schiene (14A) aufweist, die sich in der Richtung der Beschleunigung im hinteren Teil der Bewegung des Wagens (7) erstreckt, und eine Vorrichtung (27, 28), die von dem Wagen (7) getragen ist, um eine Bremskraft desselben bezüglich der Schiene (14A) zu erzeugen.

17. Vorrichtung zum zeitweiligen Ziehen gemäß Anspruch 16, dadurch gekennzeichnet, daß die von dem Wagen getragene Vorrichtung (27, 28) zum Erzeugen der Bremskraft zumindest einen Bremsschuh umfaßt, der betätigt werden kann, um auf die Schiene (14A) zu wirken.

18. Vorrichtung zum zeitweiligen Ziehen gemäß Anspruch 17, dadurch gekennzeichnet, daß die von dem Wagen (7) getragene Vorrichtung (27, 28) zum Erzeugen einer Bremskraft einen Generator für ein magnetisches Feld umfaßt, der gesteuert werden kann, so daß er auf die Schiene (14A) mittels Wirbelströme wirkt.

19. Katapult für Flugzeugträger, dadurch gekennzeichnet, daß es eine Vorrichtung zum Ziehen gemäß irgendeinem der Ansprüche 1 bis 18 aufweist.
